# EUROPÄISCHE PATENTANMELDUNG

(11) **EP 4 585 341 A1**
(43) Veröffentlichungstag der Anmeldung: **16.07.2025**
(21) Anmeldenummer: 24218674.0
(22) Anmeldetag: 10.12.2024
(51) Int. Cl.: B23F 17/00, B23F 19/10, B23F 23/12

(54) **VORRICHTUNG ZUR ANFASBEARBEITUNG**

(30) Priorität: 15.12.2023 DE 102023135391
(71) Anmelder: Liebherr-Verzahntechnik GmbH, 87437 Kempten (DE)
(72) Erfinder: STÖLZLE, Philipp, 87700 Memmingen (DE); HAAS, Gebhard, 87452 Altusried (DE)
(74) Vertreter: Behr, Wolfgang

(57) **Zusammenfassung**

Vorrichtung zur Anfasbearbeitung eines verzahnten Werkstücks (1), wobei die Vorrichtung mindestens eine Werkstückspindel mit einer drehbar gelagerten Werkstückaufnahme zur Aufnahme des Werkstücks (1) und einen über mindestens eine Linearachse relativ zur Werkstückspindel bewegbaren Bearbeitungskopf (50) umfasst, wobei an dem Bearbeitungskopf (50) mindestens eine Werkzeugspindel (20) mit einer drehbar gelagerten Werkzeugaufnahme zur Aufnahme mindestens eines Werkzeugs zur Bearbeitung eines in der Werkstückaufnahme aufgenommenen Werkstücks (1) vorgesehen ist, und wobei an dem Bearbeitungskopf (50) eine Frässpindel (30) mit einer drehbar gelagerten Fräseraufnahme zur Aufnahme eines Fingerfräsers zur Anfasbearbeitung einer Kante einer Verzahnung des in der Werkstückaufnahme aufgenommenen Werkstücks vorgesehen ist, wobei der Anstellwinkel eines in der Fräseraufnahme aufgenommenen Fingerfräsers (3) an die Kante (5, 6) der Verzahnung über eine erste Schwenkachse (35) einstellbar ist, und wobei die Frässpindel (30) über die erste Schwenkachse (35) schwenkbar an einem Schwenkarm (40) angeordnet ist, wobei der Schwenkarm (40) seinerseits über eine zweite Schwenkachse (45), welche parallel zur ersten Schwenkachse (35) ausgerichtet ist, schwenkbar am Bearbeitungskopf (50) angeordnet ist.

## Beschreibung

Die vorliegende Erfindung betrifft eine Vorrichtung zur Anfasbearbeitung eines verzahnten Werkstücks.

Eine solche Vorrichtung wird eingesetzt, um die Kanten eines verzahnten Werkstückes mit einer Fase zu versehen. Dies verhindert, dass die scharfen Kanten der Verzahnung im Rahmen der weiteren Handhabung der Werkstücke eine Verletzungsgefahr darstellen, oder zu Beschädigungen an anderen Werkstücken oder Werkzeugen führen.

Eine Anfasvorrichtung ist beispielsweise aus Druckschrift DE 10 2018 108 632 A1 bekannt. Hierbei ist eine Frässpindel zur Aufnahme eines Fingerfräsers an einem Bearbeitungskopf vorgesehen, welcher über mehrere Linearachsen bewegt werden kann. Der Anstellwinkel des Fingerfräsers kann hierbei über eine Schwenkachse eingestellt werden, mittels welcher die Frässpindel an dem Bearbeitungskopf angeordnet ist.

Eine ähnliche Ausgestaltung ist auch in Druckschrift DE 10 2018 108 622 A1 gezeigt. Hierbei ist die Frässpindel an einem Bearbeitungskopf angeordnet, welcher eine weitere Werkzeugaufnahme umfasst, in welcher ein weiteres Anfaswerkzeug aufgenommen ist. Je nach Zugänglichkeit der entsprechenden Kanten der Werkstückes kann hierbei entweder der Fingerfräser oder das andere Anfaswerkzeug zum Einsatz kommen.

Druckschrift DE 10 2014 014 132 A1 zeigt eine Ausgestaltung, bei welcher eine Frässpindel mittels eines Schwenkarms an einem Bearbeitungskopf angeordnet ist, an welchen weiterhin eine Werkzeugaufnahme zur Aufnahme eines Schleif- oder Fräswerkzeuges, mit welchem die Verzahnung selbst hergestellt wird, angeordnet ist. Der in der Frässpindel angeordnete Anfasfräser wird hierbei mittels des Schwenkarms senkrecht zu einer oberen bzw. unteren Stirnkante der Verzahnung des Werkstücks angeordnet und erzeugt einen Fasenwinkel, welcher durch die Form des Anfasfräsers vorgegeben ist. Eine am Schwenkarm angeordnete weitere Schwenkachse dient dazu, den Anfasfräser wahlweise von oben auf die Oberkante oder von unten auf die Unterkante des Werkstücks anzusetzen.

Aufgabe der vorliegenden Erfindung ist es, eine verbesserte Anfasvorrichtung zur Verfügung zu stellen.

Diese Aufgabe wird durch eine Anfasvorrichtung gemäß Anspruch 1 gelöst. Bevorzugte Ausgestaltungen der vorliegenden Erfindung sind Gegenstand der Unteransprüche.

Die vorliegende Erfindung umfasst eine Vorrichtung zur Anfasbearbeitung eines verzahnten Werkstücks, wobei die Vorrichtung mindestens eine Werkstückspindel mit einer drehbar gelagerten Werkstückaufnahme zur Aufnahme des Werkstücks und einen über mindestens eine Linearachse relativ zur Werkstückspindel bewegbaren Bearbeitungskopf umfasst, wobei an dem Bearbeitungskopf mindestens eine Werkzeugspindel mit einer drehbar gelagerten Werkzeugaufnahme zur Aufnahme mindestens eines Werkzeugs zur Bearbeitung eines in der Werkstückaufnahme aufgenommenen Werkstücks vorgesehen ist, und wobei an dem Bearbeitungskopf eine Frässpindel mit einer drehbar gelagerten Fräseraufnahme zur Aufnahme eines Fingerfräsers zur Anfasbearbeitung einer Kante einer Verzahnung des in der Werkstückaufnahme aufgenommenen Werkstücks vorgesehen ist, wobei der Anstellwinkel eines in der Fräseraufnahme aufgenommenen Fingerfräsers an die Kante der Verzahnung über eine erste Schwenkachse einstellbar ist. Erfindungsgemäß ist vorgesehen, dass die Frässpindel über die erste Schwenkachse schwenkbar an einem Schwenkarm angeordnet ist, wobei der Schwenkarm seinerseits über eine zweite Schwenkachse, welche parallel zur ersten Schwenkachse ausgerichtet ist, schwenkbar am Bearbeitungskopf angeordnet ist.

Die Erfinder der vorliegenden Erfindung haben erkannt, dass durch die Anordnung der Frässpindel an einem Schwenkarm und die beiden zur Verschwenkung des Schwenkarms und der Frässpindel vorgesehenen parallelen Schwenkachsen eine genauere und schnellere Fertigung von Fasen möglich ist als gemäß dem Stand der Technik, wobei die Anordnung an dem Bearbeitungskopf ein zu einem vorangegangenen oder nachfolgenden Bearbeitungsschritt sequentielles Anfasen erfolgen kann, ohne dass Werkstück oder Werkzeug umgespannt oder gewechselt werden müssten.

Gemäß einer möglichen Ausgestaltung der vorliegenden Erfindung steht die Rotationsachse der Frässpindel senkrecht auf der zweiten Schwenkachse.

Gemäß einer möglichen Ausgestaltung der vorliegenden Erfindung kann die Rotationsachse der Frässpindel über die zweite Schwenkachse in einer Ebene verschwenkt werden, welche parallel zur Rotationsachse der Werkstückspindel verläuft.

Gemäß einer möglichen Ausgestaltung der vorliegenden Erfindung verlaufen die erste und die zweite Schwenkachse parallel zur Rotationsachse der Werkzeugspindel.

Gemäß einer möglichen Ausgestaltung der vorliegenden Erfindung umfasst die Vorrichtung einen ersten Antrieb für die erste Schwenkachse und einem zweiten Antrieb für die zweite Schwenkachse und einer Steuerung zur Ansteuerung des ersten und des zweiten Antriebs. Hierdurch kann der Anfasprozess automatisiert werden. Insbesondere kann es sich bei dem ersten und/oder dem zweiten Antrieb um einen NC-Antrieb handeln.

Gemäß einer möglichen Ausgestaltung der vorliegenden Erfindung ist die Steuerung ausgeführt und/oder programmiert, den ersten Antrieb in einer Bearbeitungsposition zur Einstellung des Anstellwinkel eines in der Fräseraufnahme aufgenommenen Fingerfräsers an die Kante der Verzahnung und/oder zur Umstellung zwischen der Bearbeitung einer Oberkante und einer Unterkante der Verzahnung anzusteuern.

Gemäß einer weiteren möglichen Ausgestaltung der vorliegenden Erfindung ist die Steuerung ausgeführt und/oder programmiert, die Frässpindel in einer Bearbeitungsposition so zu positionieren, in welcher sich ein in der Fräseraufnahme aufgenommener Fingerfräser von einer Position neben dem Werkstück ausgehend mit einer schrägen Ausrichtung zu der Kante der Verzahnung erstreckt. Insbesondere kann sich der Fräser hierbei von seitlich unten zu einer oberen Kante nach oben erstrecken, oder von seitlich oben zu einer unteren Kante nach unten erstrecken.

Gemäß einer weiteren möglichen Ausgestaltung der vorliegenden Erfindung ist die Steuerung ausgeführt und/oder programmiert, den Schwenkarm mit der Frässpindel von einer Bearbeitungsposition in eine Parkposition und/oder zurück zu verfahren.

Bevorzugt ist die Steuerung so ausgeführt und/oder programmiert, dass die erste und die zweite Schwenkachse beim Verfahren in die Bearbeitungsposition verfahren werden, dass sich ein Winkel zwischen der Rotationsachse der Frässpindel und einer Haupterstreckungsrichtung des Schwenkarms verändert.

Insbesondere kann die erste Schwenkachse hierbei verfahren werden, um den Fingerfräser in eine Zahnlücke einzufädeln, und/oder um den gewünschten Anstellwinkel an die Kante und damit den erzeugten Fasenwinkel einzustellen. Die zweite Schwenkachse wird dagegen verfahren, um die Frässpindel aus der Parkposition in eine Bearbeitungsposition vor dem Werkstück zu verfahren, in welcher die Frässpindel vor einem in der Werkzeugaufnahme des Bearbeitungskopfes angeordnetem Werkzeug angeordnet ist.

Gemäß einer weiteren möglichen Ausgestaltung der vorliegenden Erfindung umfasst die Vorrichtung ein Steuerung zur Ansteuerung eines NC-Antriebs der zweiten Schwenkachse und bevorzugt zur Ansteuerung eines NC-Antriebs der ersten Schwenkachse, eines NC-Antriebs der mindestens einen Linearachse des Bearbeitungskopfes und/oder eines NC-Antriebs der Werkstückspindel.

Gemäß einer möglichen Ausgestaltung der vorliegenden Erfindung umfasst die Steuerung eine Anfasbearbeitungsfunktion, welche ausgeführt und/oder programmiert ist, die zweite Schwenkachse während einer Anfasbearbeitung synchron zu einer Rotation der Werkstückspindel anzusteuern, um einen in der Fräseraufnahme aufgenommenen Fingerfräser gesteuert entlang der Kante eines in der Werkstückaufnahme aufgenommenen verzahnten Werkstücks und insbesondere durch die einzelnen Zahnlücken zu führen. Die zweite Schwenkachse hat hierbei eine mit einer parallel zur Rotationsachse des Werkstücks verlaufenden Linearachse vergleichbare Funktion, indem sie die Frässpindel und damit den Fingerfräser in einer Richtung parallel zur Rotationsachse des Werkstücks der Kontur der einzelnen Zahnlücken der Verzahnung folgend entlang der Kante der Verzahnung führt. Gegenüber einer Bewegung des Bearbeitungskopfes hat die Verwendung der zweiten Schwenkachse den Vorteil, dass eine sehr viel geringere Masse bewegt werden muss, so dass die Anfasbearbeitung schneller und präziser erfolgen kann.

Gemäß einer möglichen Ausgestaltung der vorliegenden Erfindung ist die Anfasbearbeitungsfunktion weiterhin ausgeführt und/oder programmiert, auch die erste Schwenkachse während einer Anfasbearbeitung synchron zu einer Rotation der Werkstückspindel anzusteuern. Zum einen können hierdurch Veränderungen im Anstellwinkel, welche durch die Bewegung des Schwenkarms durch die zweite Schwenkachse entstehen, ausgeglichen werden. Zum anderen lässt sich ein sich gezielt über eine Zahnlücke verändernder Anstellwinkel des Fingerfräsers realisieren. Hierdurch kann beispielsweise die Größe und/oder der Fasenwinkel der Fase in einer Ebene, welche parallel zur Rotationsachse des Werkstücks verläuft und senkrecht auf der Flanke der Verzahnung steht, gezielt beeinflusst und bevorzugt über die Zahnlücke hinweg gleichmäßiger gestaltet werden.

Gemäß einer möglichen Ausgestaltung der vorliegenden Erfindung wird die mindestens eine Linearachse, über welche der Bearbeitungskopf verfahrbar ist, zum Einstellen der initialen Position der Frässpindel relativ zum Werkstück angesteuert.

Insbesondere wird hierbei eine Linearachse, welche senkrecht auf der Rotationsachse der Werkstückspindel und/oder der Rotationsachse der Werkzeugspindel steht und/oder dem Einstellen eines Achsabstands zwischen der Rotationsachse der Werkstückspindel und der Rotationsachse der Werkzeugspindel dient, und/oder eine Linearachse, welche parallel zur Rotationsachse der Werkstückspindel verläuft, zum Einstellen der initialen Position der Frässpindel relativ zum Werkstück angesteuert.

Gemäß einer möglichen Ausgestaltung der vorliegenden Erfindung ist der Bearbeitungskopf über mindestens eine Linearachse parallel zur Rotationsachse der Werkzeugaufnahme und/oder parallel zur ersten und/oder zweiten Schwenkachse verfahrbar, wobei die Steuerung ausgeführt und/oder programmiert ist, die Linearachse zum Einstellen der initialen Position der Frässpindel relativ zum Werkstück anzusteuern. Insbesondere ist die Steuerung hierbei ausgeführt und/oder programmiert ist, die Linearachse so anzusteuern, dass der Fingerfräser zur Anfasbearbeitung außermittig zum Werkstück angeordnet ist und/oder die Rotationsachse des Fingerfräsers in einer Ebene verläuft, welche die Rotationsachse der Werkstückspindel nicht schneidet, sondern parallel und beabstandet zu einer Radialebene, in welcher die Rotationsachse der Werkstückspindel verläuft, angeordnet ist. Dies hat insbesondere bei Schrägverzahnungen Vorteile bei der Anfasbearbeitung.

Gemäß einer möglichen Ausgestaltung der vorliegenden Erfindung werden die Linearachsen nur zum Einstellen der initialen Position der Frässpindel relativ zum Werkstück angesteuert und während der Anfasbearbeitung nicht verfahren.

In einer alternativen Ausgestaltung kann jedoch auch mindestens eine oder mehrere Linearachsen, über welche der Bearbeitungskopf verfahrbar ist, während der Anfasbearbeitung synchron zur Rotationsbewegung des Werkstücks und insbesondere durch die einzelnen Zahnlücken verfahren werden.

Gemäß einer möglichen Ausgestaltung der vorliegenden Erfindung ist der Bearbeitungskopf über mindestens eine Linearachse parallel zur Rotationsachse der Werkzeugaufnahme und/oder parallel zur ersten und/oder zweiten Schwenkachse verfahrbar, wobei die Anfasbearbeitungsfunktion ausgeführt und/oder programmiert, die Linearachse synchron zu einer Rotation der Werkstückspindel anzusteuern.

Hierdurch kann die Position des Fingerfräser bezüglich einer Mittelebene des Werkstücks über die Zahnlücke variiert werden. Hierdurch ergeben sich insbesondere bei der Anfasbearbeitung von Schrägverzahnungen Vorteile im Hinblick auf die Beeinflussung der Fasenkontur und insbesondere eine gleichmäßigere Fase über die Zahnlücke.

Gemäß einer möglichen Ausgestaltung der vorliegenden Erfindung ist an dem Schwenkarm ein Einfädelsensor angeordnet.

Bevorzugt ist die Steuerung ausgebildet und/oder programmiert, vor der Anfasbearbeitung mittels des Einfädelsensors die Position der Zähne bzw. Zahnlücken der Verzahnung in Umfangsrichtung des Werkstücks und/oder die Position mindestens einer Kante der Verzahnung in axialer Richtung des Werkstücks zu erfassen, um den Fingerfräser für die Anfasbearbeitung in die Zahnlücken der Verzahnung einzufädeln bzw. die Bewegung des Fingerfräsers mit der Rotationsbewegung des Werkstücks so zu synchronisieren, dass der Fingerfräser entlang der Kante der Verzahnung geführt wird, um die Kante anzufasen.

Bevorzugt ist die Steuerung ausgebildet und/oder programmiert, vor der Anfasbearbeitung mittels des Einfädelsensors die Position mindestens einer Kante der Verzahnung in axialer Richtung des Werkstücks zu erfassen, um den Fingerfräser in axialer Richtung in der richtigen Position zu der Kante zu positionieren, um die gewünschte Größe der Fase zu erzeugen. Diese Option kann wichtig sein, wenn es auf eine genaue Fasengröße ankommt und die Werkstücktoleranzen hier zu viel Spielraum lassen, so dass die axiale Position der Kante nicht mit auseichender Genauigkeit vorbekannt ist.

Wesentlicher Vorteil dieser Ausgestaltung gegenüber einer Anordnung des Einfädelsensors am Hauptteil des Bearbeitungskopfes ist die erhöhte Geschwindigkeit, da der Einfädelsensor durch die Anordnung am Schwenkarm, an welchem auf die Frässpindel für den Fingerfräser angeordnet ist, nahe an der Anfas-Bearbeitungsposition angeordnet ist. Es muss daher nach dem Erkennen der Zahnlücke nur noch die Frässpindel in die Lücke geschwenkt werden, ohne dass der Einfädelsensor verfahren werden müsste.

Ein am Bearbeitungskopf selbst angeordneter Einfädelsensor müsste dagegen erst in eine Position vor der Verzahnung gefahren werden, um die Zahnlücke zu erfassen, und anschließend wieder in seine Parkposition verfahren werden. Erst danach könnte dann der Fräskopf mit dem Fingerfräser zum Werkstück zugestellt werden.

Die Anordnung eines Einfädelsensors am Schwenkarm ist auch unabhängig von der bisher beschriebenen Ausgestaltung Gegenstand der vorliegenden Erfindung.

Die vorliegende Erfindung umfasst daher in einem zweiten unabhängigen Aspekt eine Vorrichtung zur Anfasbearbeitung eines verzahnten Werkstücks, wobei die Vorrichtung mindestens eine Werkstückspindel mit einer drehbar gelagerten Werkstückaufnahme zur Aufnahme des Werkstücks und einen über mindestens eine Linearachse relativ zur Werkstückspindel be-wegbaren Bearbeitungskopf umfasst, wobei an dem Bearbeitungskopf mindestens eine Werkzeugspindel mit einer drehbar gelagerten Werkzeugaufnahme zur Aufnahme mindestens eines Werkzeugs zur Bearbeitung eines in der Werkstückaufnahme aufgenommenen Werkstücks vorgesehen ist, und wobei an dem Bearbeitungskopf eine Frässpindel mit einer drehbar gelagerten Fräseraufnahme zur Aufnahme eines Fingerfräsers zur Anfasbear-beitung einer Kante einer Verzahnung des in der Werkstückaufnahme auf-genommenen Werkstücks vorgesehen ist, wobei die Frässpindel über einen Schwenkarm an dem Bearbeitungskopf angeordnet ist. Der zweite Aspekt ist dadurch gekennzeichnet, dass an dem Schwenkarm ein Einfädelsensor angeordnet ist.

Hierdurch ergeben sich die bereits oben beschriebenen Vorteile.

Bevorzugte Ausgestaltungen, welche bereits oben zum ersten Aspekt der vorliegenden Erfindung beschrieben wurden, sind bevorzugt auch bei der Vorrichtung gemäß dem zweiten Aspekt verwirklicht.

Weiterhin wird der zweite Aspekt wie bereits beschrieben bevorzugt mit dem ersten Aspekt kombiniert.

Weitere bevorzugte Ausgestaltungen, welche sowohl mit dem zweiten Aspekt, als auch mit dem ersten Aspekt, oder deren Kombination zum Einsatz kommen können, werden im folgenden näher beschrieben.

Gemäß einer möglichen Ausgestaltung der vorliegenden Erfindung ist der Einfädelsensor am freien Ende des Schwenkarms angeordnet, insbesondere an einem Lagerbereich für eine zweite Schwenkachse, mit welcher die Frässpindel an dem Schwenkarm angeordnet ist.

Gemäß einer möglichen Ausgestaltung der vorliegenden Erfindung ist der Schwenkarm über eine erste Schwenkachse schwenkbar an dem Bearbeitungskopf angeordnet und die Vorrichtung weist eine Steuerung auf, welche eingerichtet und/oder programmiert ist, den Schwenkarm in eine Messposition zu verfahren, in welcher sich der Einfädelsensor vor der zu vermessenden Verzahnung befindet.

Gemäß einer möglichen Ausgestaltung der vorliegenden Erfindung ist die Frässpindel über eine zweite Schwenkachse an dem Schwenkarm angeordnet ist und die Steuerung steuert die zweite Schwenkachse so an, dass sich ein in der Frässpindel aufgenommener Fingerfräser in der Messposition außer Eingriff mit der Verzahnung befindet.

Gemäß einer möglichen Ausgestaltung der vorliegenden Erfindung ist die Steuerung eingerichtet und/oder programmiert, durch Verschwenken der Frässpindel über die zweite Schwenkachse den Fingerfräser in Eingriff mit der Kante zu bringen, nachdem die Zahnlücken der Verzahnung durch den Einfädelsensor erkannt wurden. Hierdurch kann der Fingerfräser ohne ein Verfahren des Einfädelsensors gesteuert in die Zahnlücke eintauchen und der Zahnkontur folgend die Anfasbearbeitung ausführen.

Gemäß einer möglichen Ausgestaltung der vorliegenden Erfindung handelt es sich bei dem Einfädelsensor um einen berührungslos arbeitenden Sensor, insbesondere um einen induktiven, kapazitiven und/oder optischen Sensor. Durch einen solchen berührungslos arbeitenden Sensor müssen nur zwei Zahnköpfe erkannt werden, um daraus die Mitte der Zahnlücke zu berechnen.

Gemäß einer möglichen Ausgestaltung der vorliegenden Erfindung ist ein Arbeitsbereich für das Werkzeug am Bearbeitungskopf durch eine hinter dem Werkzeug vorgesehene Begrenzungswand nach hinten begrenzt, wobei die zweite Schwenkachse in einem Bereich vor der Begrenzungswand an dem Bearbeitungskopf angeordnet ist. Hierdurch ist der Schwenkarm in der Nähe der Werkzeugspindel angeordnet und die Frässpindel kann durch Verschwenken des Schwenkarms das Werkstück leicht erreichen.

Gemäß einer möglichen Ausgestaltung der vorliegenden Erfindung erstreckt sich der Schwenkarm in einer Parkposition entlang der Begrenzungswand nach oben und endet bevorzugt unterhalb einer Oberkante der Begrenzungswand. Der Schwenkarm bildet hierdurch keine Störkontur für die Bearbeitung mit dem in der Werkzeugspindel aufgenommenen Werkzeug.

Gemäß einer möglichen Ausgestaltung der vorliegenden Erfindung ist der Schwenkarm bezüglich der Richtung der Rotationsachse der Werkzeugspindel axial neben der Werkzeugaufnahme angeordnet und schwenkt daher in einem Bereich neben einem in der Werkzeugaufnahme aufgenommenen Werkzeug. Insbesondere ist der Schwenkarm bezüglich der Richtung der Rotationsachse der Werkzeugspindel axial in Richtung auf ein Hauptlager der Werkstückspindel zu neben der Werkzeugaufnahme angeordnet.

Gemäß einer möglichen Ausgestaltung der vorliegenden Erfindung ist die zweite Schwenkachse an einem Gehäuse des Hauptlagers der Werkzeugspindel angeordnet.

Gemäß einer möglichen Ausgestaltung der vorliegenden Erfindung ist an dem freien Ende des Schwenkarms ein sich in axialer Richtung bezüglich der Rotationsachse der Werkstückspindel erstreckendes Element angeordnet, an welchem die Frässpindel angeordnet ist. Hierdurch kann die Frässpindel in einem Bereich vor einem in der Werkzeugaufnahme der Werkzeugspindel aufgenommenen Werkzeug angeordnet werden. Hierdurch ist bei einem Wechseln zwischen einer Bearbeitung durch das Werkzeug und einer Anfasbearbeitung durch den Fingerfräser der Verfahrweg für den Bearbeitungskopf geringer.

Die erste Schwenkachse kann zwischen dem Schwenkarm und dem sich in axialer Richtung erstreckenden Element oder zwischen dem sich in axialer Richtung erstreckenden Element und der Frässpindel angeordnet sein.

Gemäß einer möglichen Ausgestaltung der vorliegenden Erfindung umfasst die Vorrichtung einen Sensor zur Bruchkontrolle eines in der Fräseraufnahme aufgenommenen Fingerfräsers, wobei der Sensor bevorzugt so angeordnet ist, dass er den Fingerfräser in einer Parkposition des Schwenkarms prüft. Insbesondere kann der Sensor hierbei an einer Oberkante einer Begrenzungswand, wie sie oben beschrieben wurde, angeordnet sein.

Gemäß einer möglichen Ausgestaltung der vorliegenden Erfindung handelt es sich bei der Werkzeugspindel um eine Werkzeugspindel zur Verzahnbearbeitung eines in der Werkstückaufnahme aufgenommenen Werkstücks, d.h. zur Durchführung einer Bearbeitung, durch welche die Verzahnung selbst hergestellt und/oder bearbeitet wird. Insbesondere kann es sich bei der Verzahnbearbeitung um Verzahnungsfräsen handeln.

Gemäß einer möglichen Ausgestaltung der vorliegenden Erfindung handelt es sich bei der Vorrichtung daher um eine Verzahnmaschine, insbesondere eine Verzahnungsfräsmaschine, welche mit einer Funktion zum Anfasfräsen ausgestattet ist.

Gemäß einer möglichen Ausgestaltung der vorliegenden Erfindung ist der Bearbeitungskopf über mindestens zwei und bevorzugt drei Linearachsen verfahrbar.

Gemäß einer möglichen Ausgestaltung der vorliegenden Erfindung ist eine erste Linearachse zum Verfahren in einer Richtung senkrecht zur Rotationsachse der Werkstückaufnahme und senkrecht zur Rotationsachse der Werkzeugaufnahme und/oder eine zweite Linearachse zum Verfahren in einer Richtung parallel zur Rotationsachse der Werkstückaufnahme vorgesehen.

Gemäß einer möglichen Ausgestaltung der vorliegenden Erfindung ist der Bearbeitungskopf über eine Schwenkachse gegenüber der Werkstückspindel verschwenkbar ist, insbesondere zur Einstellung eines Achskreuzwinkels, wobei die Schwenkachse bevorzugt senkrecht zur Rotationsachse der Werkstückaufnahme und senkrecht zur Rotationsachse der Werkzeugaufnahme verläuft.

Die erfindungsgemäße Steuerung kann einen Mikro-Controller und einen nicht flüchtigen Speicher umfassen, in welchem ein Computerprogramm abgespeichert ist, welches auf dem Mikro-Controller abläuft. Die Steuerung steht hierbei bevorzugt in Signalverbindung mit den Antrieben und steuert diese an. Insbesondere ist das Computerprogramm hierbei so ausgestaltet, dass es, läuft es auf dem Mikro-Controller ab, die oben sowie im weiteren beschriebenen Funktionen der Steuerung implementiert beziehungsweise die erfindungsgemäße Vorrichtung so ansteuert, dass diese die oben sowie im weiteren beschriebenen Verfahren durchführt.

Gemäß einer möglichen Ausgestaltung der vorliegenden Erfindung ist die Steuerung so ausgeführt und/oder programmiert, dass sie die oben sowie im weiteren beschriebenen Verfahren automatisch durchführt, und/oder für eine Mehrzahl von identischen Werkstücken jeweils identisch durchführt.

Gemäß einer möglichen Ausgestaltung der vorliegenden Erfindung handelt es sich bei dem Werkstück, welches durch die erfindungsgemäße Vorrichtung anfasbearbeitet werden kann, um ein Zahnrad, insbesondere um ein Zahnrad mit einer Stirnverzahnung. Insbesondere kann es sich hierbei um ein außenverzahntes Zahnrad handeln.

Die Kante oder Kanten, welche durch die erfindungsgemäße Vorrichtung anfasbearbeitet werden können, sind bevorzugt die Kanten, welche die Verzahnung des Zahnrades mit einer oberen und/oder unteren Stirnseite des verzahnten Bereiches aufweist.

Die vorliegende Erfindung umfasst weiterhin ein Verfahren zur Herstellung eines verzahnten Werkstücks unter Verwendung einer Vorrichtung, wie sie oben beschrieben wurde, mit den Schritten:
- Bearbeitung eines in der Werkstückaufnahme aufgenommenen Werkstücks über ein in der Werkzeugaufnahme aufgenommenes Werkzeug und
- Anfasen mindestens einer Kante des verzahnten Werkstücks mit einem in der Fräseraufnahme aufgenommenen Fingerfräser.

Gemäß einer möglichen Ausgestaltung der vorliegenden Erfindung ist vorgesehen, dass sich der Schwenkarm während der Bearbeitung des Werkstücks mit dem Werkzeug in einer Parkposition befindet und über die zweite Schwenkachse in eine Bearbeitungsposition verfahren wird, um die Kante anzufasen.

Gemäß einer möglichen Ausgestaltung der vorliegenden Erfindung ist vorgesehen, dass während der Anfasbearbeitung ein Antrieb der zweiten Schwenkachse synchron zur Rotation des Werkstücks betätigt wird, um den Fingerfräser entlang der Kante zu führen.

Gemäß einer möglichen Ausgestaltung der vorliegenden Erfindung ist vorgesehen, dass eine Bruchkontrolle des Fingerfräsers mittels eines Sensors erfolgt, während sich der Schwenkarm in einer Parkposition befindet. Insbesondere kann es sich bei dem Sensor um einen optischen Sensor handeln, beispielsweise um eine Lichtschranke, welche die Anwesenheit der Spitze des Fingerfräsers prüft.

Gemäß einer möglichen Ausgestaltung der vorliegenden Erfindung ist vorgesehen, dass eine Vermessung der Verzahnung durch den Einfädelsensor erfolgt, während sich der Schwenkarm in einer Messposition befindet.

Die vorliegende Erfindung wird nun anhand von Ausführungsbeispielen und Zeichnungen näher beschrieben.

Dabei zeigen:
- Fig. 1:: ein Ausführungsbeispiel einer erfindungsgemäßen Anfasvorrichtung in einer Seitenansicht in einer ersten Bearbeitungsposition zur Anfasbearbeitung einer unteren Kante einer Verzahnung,
- Fig. 2:: das in Fig. 1 gezeigte Ausführungsbeispiel in einer zweiten Bearbeitungsposition zur Anfasbearbeitung einer oberen Kante einer Verzahnung,
- Fig. 3:: das in Fig. 1 und 2 gezeigte Ausführungsbeispiel in einer Parkposition, in welcher eine Werkzeugbruchkontrolle vorgenommen wird,
- Fig. 4:: eine perspektivische Gesamtansicht sowie eine vergrößerte Detailansicht der erfindungsgemäßen Anfasvorrichtung in der zweiten Bearbeitungsposition,
- Fig. 5:: eine perspektivische Gesamtansicht und vergrößerte Detailansicht der erfindungsgemäßen Anfasvorrichtung in der Parkposition,
- Fig. 6: eine Detailansicht des Werkzeugbruchsensors und des an diesem angeordneten Fingerfräsers aus Fig. 5,
- Fig. 7: die in Fig. 2 gezeigte zweite Bearbeitungsposition zur Anfasbearbeitung einer oberen Kante einer Verzahnung in einer vergrößerten Detailansicht des Schwenkarms, in welcher der am Schwenkarm angeordnete Einfädelsensor ersichtlich ist und
- Fig. 8: das Ausführungsbeispiel in einer Messposition zur Erfassung der Zahnlücken mittels des Einfädelsensors.

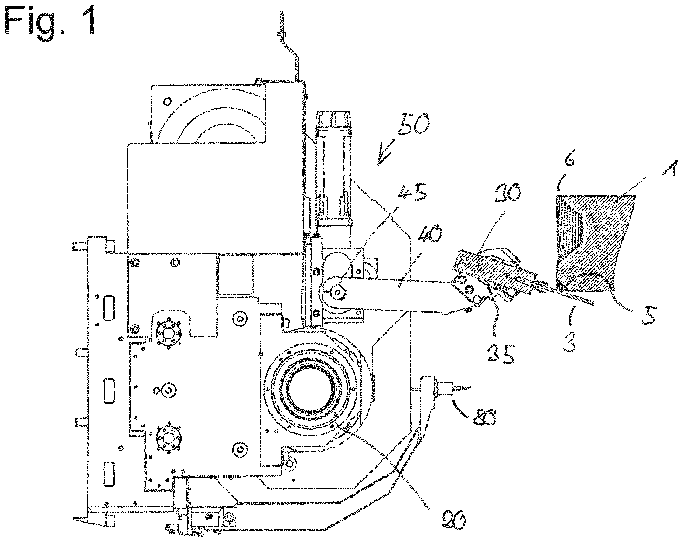

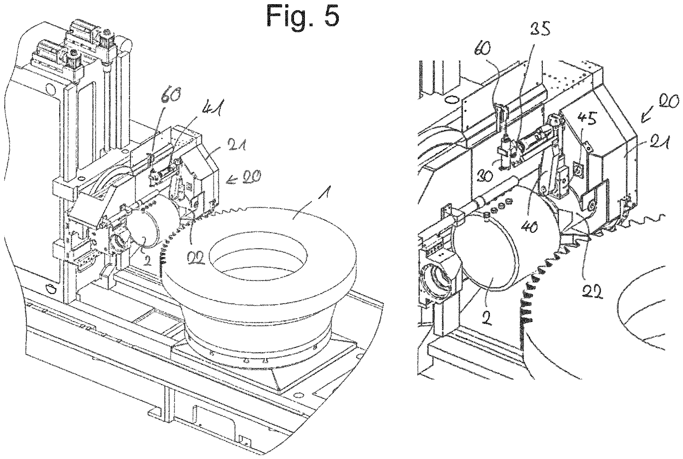

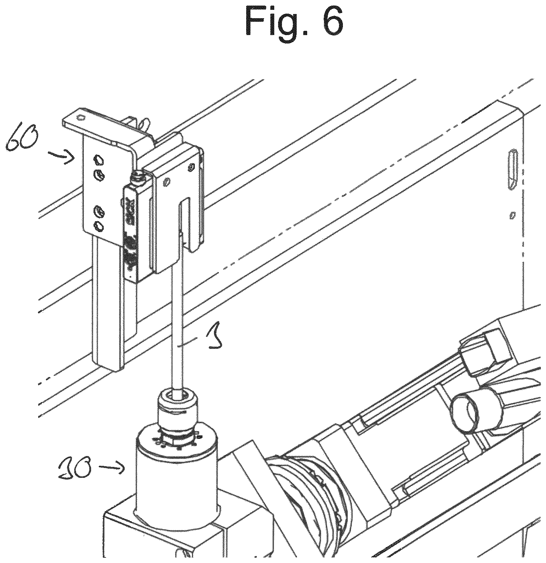

Fig. 1 - 8 zeigen ein Ausführungsbeispiel einer erfindungsgemäßen Vorrichtung zur Anfasbearbeitung eines verzahnten Werkstückes 1.

Die Vorrichtung umfasst eine Werkstückspindel 10 mit einer drehbar gelagerten Werkstückaufnahme zur Aufnahme der Werkstücks 1. Das Werkstück 1 kann daher über die Werkstückspindel um die Rotationsachse C1 gedreht werden. Die Werkstückspindel umfasst hierbei im Ausführungsbeispiel einen NC-Antrieb.

Weiterhin ist ein Bearbeitungskopf 50 vorgesehen, an welchem eine Werkzeugspindel 20 vorgesehen ist, an welcher ein Werkzeug 2 aufnehmbar ist. Das Werkzeug 2 ist hierbei mittels der Werkzeugspindel 20 um eine Rotationsachse B1 drehbar. Auch die Werkzeugspindel verfügt über einen NC-Antrieb.

Der Bearbeitungskopf mit der Werkzeugspindel 20 ist über mindestens eine und im Ausführungsbeispiel über mehrere Linearachsen relativ zur Werkstückspindel 10 verfahrbar.

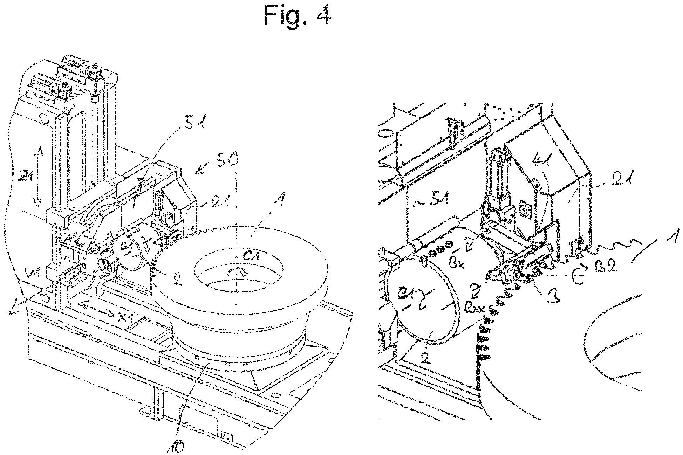

Die Bewegungsachsen, mit welchen der Bearbeitungskopf 50 im Ausführungsbeispiel verfahrbar ist, sind in Fig. 4 eingezeichnet.

Im Ausführungsbeispiel ist eine erste Linearachse X1 vorgesehen, über welche der Achsabstand zwischen dem Werkzeug 2 und dem Werkstück 1 einstellbar ist. Die erste Linearachse X1 verläuft hierbei senkrecht zu den Rotationsachsen C1 und B1 der Werkstückspindel und der Werkzeugspindel.

Weiterhin ist eine zweite Linearachse Z1 vorgesehen, über welche der Bearbeitungskopf 50 parallel zur Rotationsachse C1 der Werkstückspindel 10 verfahrbar ist. Über diesen kann das Werkzeug entlang der Breite der Verzahnung verfahren werden.

Weiterhin ist der Bearbeitungskopf 50 über eine Schwenkachse A1, welche parallel zur X1-Achse verläuft, verschwenkbar, um den Achskreuzwinkel zwischen den Rotationsachsen C1 und B1 von Werkstückspindel 10 und Werkzeugspindel 20 einzustellen.

Die Rotationsachse B1 der Werkzeugspindel 20 kann daher über die A1-Achse in einer Ebene, welche parallel zur Rotationsachse C1 der Werkstückspindel 10 verläuft, gedreht werden.

Weiterhin ist eine Shiftachse V1 vorgesehen, über welche die Werkzeugspindel parallel zur Rotationsachse B1 der Werkstückspindel verfahren werden kann. Hierdurch kann der axiale Bereich des Werkzeugs 2, welcher mit dem Werkstück in Eingriff kommt, eingestellt werden.

In der im Ausführungsbeispiel gezeigten Ausgestaltung kann die Shiftachse V1 mittels der A1-Achse gedreht werden und ist als Schlitten am Bearbeitungskopf 50 vorgesehen. In einer alternativen Ausgestaltung könnte die A1-Achse jedoch auch auf einer Y1 -Achse angeordnet sein, welche senkrecht auf der X1 -Achse und auf der Z1 - Achse steht.

Bei der in den Figuren gezeigten Ausgestaltungen der Vorrichtung und insbesondere der dort gezeigten Anordnung der Achsen handelt es sich jedoch lediglich um ein Ausführungsbeispiel. Die vorliegende Erfindung kann auch bei Verzahnmaschinen oder anderweitigen Vorrichtungen zur Anfasbearbeitung eingesetzt werden, welche eine andere Achskonfiguration aufweisen.

Bei der Vorrichtung kann es sich insbesondere um eine Verzahnmaschine handeln, welche mittels des Werkzeugs 2 eine Verzahnbearbeitung des Werkstücks 2 zur Herstellung bzw. Bearbeitung der Verzahnung vornimmt. Die Verzahnmaschine umfasst hierbei bevorzugt eine Steuerung mit einer Verzahnbearbeitungsfunktion, über welche die Achsen des Bearbeitungskopfes angesteuert werden, um die Verzahnbearbeitung, bspw. einen Wälzfräsprozess, durchzuführen.

Eine solche Ausgestaltung ist im Rahmen der vorliegenden Erfindung jedoch nicht zwingend. Vielmehr kann die Werkzeugaufnahme am Bearbeitungskopf auch, wie beispielsweise aus der DE 10 2018 108 622 A1 bekannt, dazu dienen, um ein weiteres Anfaswerkzeug aufzunehmen, beispielsweise um unterschiedliche Kanten eines Werkstückes mit unterschiedlichen Anfaswerkzeugen zu bearbeiten.

Unabhängig von dem Einsatzzweck des Werkzeugs ist erfindungsgemäß an dem Bearbeitungskopf, welcher die Werkzeugspindel 20 zur Aufnahme eines Werkzeugs 2 trägt, zusätzlich eine Frässpindel 30 vorgesehen, in welcher ein Fingerfräser 3 aufgenommen werden kann, mit welchem die Kanten 5 und 6 des in der Werkstückaufnahme aufgenommenen Werkstücks 1 anfasbearbeitet werden können. Der Fingerfräser 3 kann über die Frässpindel 30 um die Rotationsachse B2 in Rotation versetzt werden. Insbesondere wird der Fingerfräser daher zum Anfasen der Kanten jener Verzahnung, welche durch das in der Werkzeugaufnahme aufgenommene Werkzeug 2 hergestellt bzw. bearbeitet wurde, eingesetzt.

Die Frässpindel 30 ist über einen Schwenkarm 40 am Bearbeitungskopf 50 angeordnet. Zum einen ist die Frässpindel 30 hierbei über eine erste Schwenkachse 35 schwenkbar an dem Schwenkarm 40 befestigt, insbesondere an dem freien Ende des Schwenkarms. Der Schwenkarm 40 ist seinerseits über eine zweite Schwenkachse 45 am Bearbeitungskopf schwenkbar angeordnet. Die erste und die zweite Schwenkachse 35 und 45 verlaufen parallel.

Die beiden Achsen Bx und Bxx der zweiten und ersten Schwenkachse verlaufen parallel zur Rotationsachse B1 der Werkzeugspindel. Die Rotationsachse der Frässpindel steht senkrecht auf der zweiten Schwenkachse Bxx.

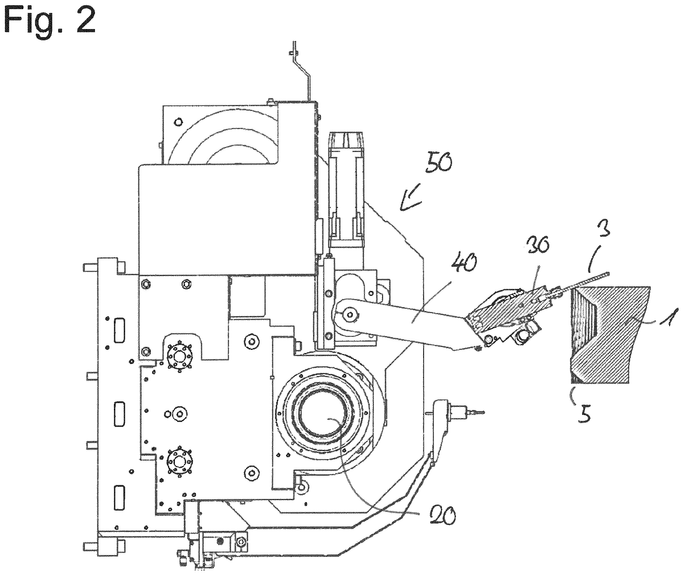

Die erste Schwenkachse 35 wird, wie in Fig. 1 und 2 erkennbar, bei der Anfasbearbeitung einer Unter- oder Oberkante dazu eingesetzt, um den Anstellwinkel des Anfasfräsers an die Kante und damit den Winkel der Fase einzustellen.

In den in Fig. 1 und 2 gezeigten Bearbeitungspositionen befindet sich die Frässpindel jeweils in einer Position neben dem Werkstück 1, das heißt außerhalb des radialen Umfangs des Werkstückes zwischen der oberen und der unteren Stirnkante des Werkstücks. Ausgehend von der Fräseraufnahme verläuft der Fingerfräser daher von einer radial äußeren Position schräg zur Kante, welche angefast wird. Insbesondere verläuft der Fingerfräser dabei wie in Fig. 1 gezeigt zum Anfasen der Unterkante des Werkstücks von außen nach innen und von oben nach unten zur Kante, zum Anfasen der Oberkante wie in Fig. 2 gezeigt von außen nach innen und von unten nach oben zur oberen Kante. Das freie Ende des Fingerfräsers befindet sich beim Anfasen oberhalb bzw. unterhalb der Stirnfläche des Werkstücks in einem Bereich innerhalb der radialen Position der Kante.

Wie ebenfalls aus Fig. 1 und 2 ersichtlich dient die erste Schwenkachse 35 dabei auch dazu, um von einer ersten, in Fig. 1 gezeigten Bearbeitungsposition zur Anfasbearbeitung einer ersten Kante in eine zweite, in Fig. 2 gezeigte Bearbeitungsposition zur Anfasbearbeitung einer zweiten Kante umzuschwenken. Weiterhin wird die erste Schwenkachse 35 auch zum Einfädeln des Fingerfräsers in eine Zahnlücke genutzt.

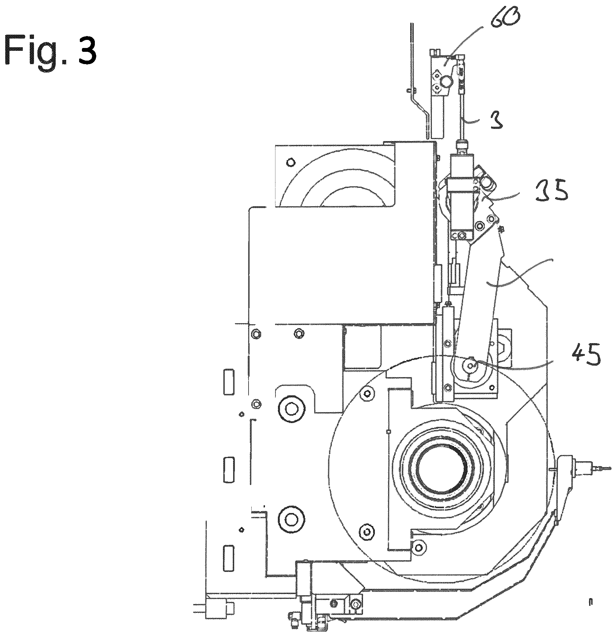

Der Schwenkarm 40 dient, wie aus einem Vergleich der Fig. 1 und 2 und Fig. 3 ersichtlich, zum einen dazu, die Frässpindel von der in Fig. 3 gezeigten Parkposition in die in Fig. 1 und 2 gezeigten Bearbeitungspositionen zu verschwenken.

In der in Fig. 3 gezeigten Parkposition befindet sich der Fingerfräser 3 und der Schwenkarm dabei außerhalb eines Kollisionsbereiches des Werkstücks 1 bei der Bearbeitung des Werkstücks mit dem in der Werkzeugaufnahme 20 aufgenommenen Werkzeug 2.

Wie in Fig. 2, 3 und 6 gezeigt befindet sich im Ausführungsbeispiel der in der Frässpindel aufgenommene Fingerfräser 3 in der Parkposition im Messbereich des Werkzeugbruchsensors 60, so dass die Steuerung in der Parkposition einen Werkzeugbruch des Fingerfräsers 3 erkennen kann. Der Werkzeugbruchsensor 60 kann als optischer Sensor ausgeführt sein. Insbesondere handelt es sich um eine Lichtschranke, in deren Messbereich die Spitze des Fingerfräsers 3 verschwenkt wird, wenn die Parkposition angefahren wird und deren Lichtweg daher unterbrochen wird, wenn der Fingerfräser intakt ist. Stellt die Steuerung daher in der Parkposition keine Unterbrechung des Lichtwegs der Lichtschranke fest, schließt sie auf einen Werkzeugbruch und unterbricht das Anfasverfahren und/oder gibt einen Warnhinweis aus.

In einer alternativen Ausführungsform kann auf den Werkzeugbruchsensor 60 auch verzichtet werden. Die Parkposition dient in diesem Fall nur dazu, den Fingerfräser und den Schwenkarm aus dem Kollisionsbereich mit dem Werkstücks 1 zu bewegen.

Durch den Schwenkarm 40 kann die Frässpindel 30 jedenfalls von der Parkposition in eine Eingriffsposition mit dem Werkstück 1 gebracht werden, in welcher der Fingerfräser 3 eine Kante des Werkstücks anfasbearbeitet.

Weiterhin wird der Schwenkarm 40 im Ausführungsbeispiel dazu eingesetzt, um während der Anfasbearbeitung die Frässpindel 30 so zu bewegen, dass der in dieser aufgenommene Fingerfräser 3 der Kante der Verzahnung des Werkstückes 1 folgt. Insbesondere wird daher als Antrieb für die zweite Schwenkachse 45 ein NC-Antrieb eingesetzt, wobei der Antrieb der zweiten Schwenkachse von einer Steuerung der Vorrichtung synchron mit der Drehbewegung eines NC-Antriebs der Werkstückspindel 10 angesteuert wird, um der Kontur der Kante der Verzahnung zu folgen.

Die zweite Schwenkachse 45 übernimmt während der Anfasbearbeitung im Wesentlichen eine Funktion, wie sie auch der Z1-Achse zukommen könnte, das heißt einer Bewegung der Frässpindel in einer Richtung parallel zur Rotationsachse C1 der Werkstückspindel. Durch die erheblich geringere Masse des Schwenkarms und der Frässpindel 30 im Vergleich zu dem gesamten Bearbeitungskopf, welcher über die Z1-Achse bewegt werden müsste, kann hierdurch jedoch eine erheblich schnellere und exaktere Ansteuerung und damit Bearbeitung erfolgen.

Zwar führt die Schwenkbewegung des Schwenkarms auch zu einer gewissen Bewegung der Frässpindel 30 in X1-Richtung, das heißt radial zur Rotationsachse C1 des Werkstücks 1. Dies verschiebt jedoch lediglich geringfügig den Bereich des Fingerfräsers 3, welcher mit der Kante des Werkstücks in Eingriff steht, und hat daher auf das Bearbeitungsergebnis keinen Einfluss.

Zudem führt die Schwenkbewegung des Schwenkarms 40 allerdings auch zu einer gewissen Verschwenkung der Ausrichtung der Rotationsachse B2 der Frässpindel 30 und damit des Fingerfräsers, und beeinflusst daher in einem gewissen Umfang die Ausrichtung der durch den Fingerfräser erzeugten Fase am Werkstück. Durch die relativ lange Erstreckung des Schwenkarmes 40 im Vergleich zu der durch die Schwenkbewegung erzeugten Hubbewegung der Frässpindel 30 ist der Einfluss auf den Fasenwinkel jedoch relativ gering und kann in den meisten Anwendungen innerhalb des zulässigen Toleranzbereiches hingenommen werden. In diesem Fall kann die erste Schwenkachse als Stellachse angesteuert werden.

Alternativ wird auch die erste Schwenkachse 35 während des Bearbeitungsvorgangs synchron zur Rotation des Werkstücks angesteuert. Die erste Schwenkachse 35 verfügt hierfür bevorzugt über einen NC-Antrieb.

Gemäß einer möglichen Ausgestaltung wird die erste Schwenkachse 35 während des Bearbeitungsvorgangs gegensinnig zur zweiten Schwenkachse 45 angesteuert, um die Ausrichtung der Rotationsachse B2 der Frässpindel 30 relativ zur Rotationsachse C1 des Werkstückes während des Bearbeitungsvorgangs konstant zu halten beziehungsweise auf einen gewünschten Wert einzustellen.

Weiterhin kann die erste Schwenkachse 35 während des Bearbeitungsvorganges gezielt dazu eingesetzt werden, um den Anstellwinkel für unterschiedliche Bereiche einer Zahnlücke jeweils gezielt einzustellen. Insbesondere kann daher die Schwenkstellung der ersten Schwenkachse 35 ebenfalls synchronisiert mit der Rotationsbewegung der Rotationsachse der Werkstückspindel angesteuert werden, um für unterschiedliche Bereiche einer Zahnlücke jeweils unterschiedliche Anstellwinkel einzustellen.

Zusätzlich oder alternativ zum Einsatz der zweiten Schwenkachse 45 zum Führen des Fingerfräsers entlang der Kante während des Bearbeitungsvorgangs kann gegebenenfalls auch die X1-Achse oder Z1-Achse eingesetzt werden, um eine Anfasbearbeitung vorzunehmen.

Die Linearachsen X1, Z1 und V1 werden weiterhin als Stellachsen für den Anfasbetrieb eingesetzt, um die Frässpindel in eine geeignete Ausgangsposition für die Anfasbearbeitung zu bringen. In einer möglichen Betriebsweise werden sie während der Anfasbearbeitung nicht mehr verstellt.

In einer möglichen Ausgestaltung der vorliegenden Erfindung wird die V1-Achse dazu eingesetzt, um den Fingerfräser außermittig zu dem Werkstück zu positionieren, d.h. die Achse des Fingerfräsers 3 verläuft während der Anfasbearbeitung jedenfalls nicht über die gesamte Zahnlücke in einer Radialebene des Werkstücks, sondern versetzt hierzu.

In einer ersten Ausgestaltung wird die V1-Achse hierbei lediglich dazu eingesetzt, um eine Ausgangsposition für die Anfasbearbeitung anzufahren, in welcher der Fingerfräser außermittig zu dem Werkstück positioniert ist, und während der Anfasbarbearbeitung nicht verfahren. Der Fingerfäser verbleibt daher über die Anfasbearbeitung in einer festen Position zur Mittelachse des Werkstücks.

In einer bevorzugten Ausgestaltung wird die V1-Achse dagegen während der Anfasbearbeitung synchronisiert mit der Rotationsbewegung der Rotationsachse der Werkstückspindel angesteuert werden, um für unterschiedliche Bereiche einer Zahnlücke jeweils unterschiedliche V1-Positionen zur Bearbeitung einzusetzen. Dies erlaubt eine gezielte Beeinflussung der Form der Fase über die Zahnlücke.

Bevorzugt erfolgt die Anfasbearbeitung und damit die Ansteuerung der Achsen für jede Zahnlücke identisch.

Bei dem gezeigten Ausführungsbeispiel ist die Werkzeugspindel 20 so am Bearbeitungskopf angeordnet, dass sich hinter dem in der Werkzeugaufnahme aufgenommenen Werkzeug 2 eine Begrenzungswand 51 erstreckt. Der Schwenkarm 40 ist hierbei über die Schwenkachse 45 so an dem Bearbeitungskopf angeordnet, dass er sich vor dieser Begrenzungswand 51 befindet. Hierdurch kann die Länge des Schwenkarms 40 relativ gering gehalten werden und dennoch eine Auslenkung erreicht werden, über welche das Werkstück problemlos erreicht wird.

Im Ausführungsbeispiel verläuft die Schwenkebene des Schwenkarm neben einem Bereich, in welchem das Werkzeugs 2 angeordnet ist, und so dass der Schwenkarm nicht mit dem Werkzeug kollidieren kann.

Im Ausführungsbeispiel ist die zweite Schwenkachse 45 hierfür an einem Hauptlagerbereich 22 der Werkzeugspindel 20 angeordnet und befindet sich neben dem Gehäuse 21 für den Antrieb der Werkzeugspindel 2.

An dem freien Ende des Schwenkarms 40 ist eine parallel zur Achsrichtung B1 der Werkzeugspindel verlaufende Strebe 41 angeordnet, welche die erste Schwenkachse 35 und den Fräskopf 30 trägt. Hierdurch ist der Fräskopf in einer axialen Position neben dem Werkzeug 2 angeordnet.

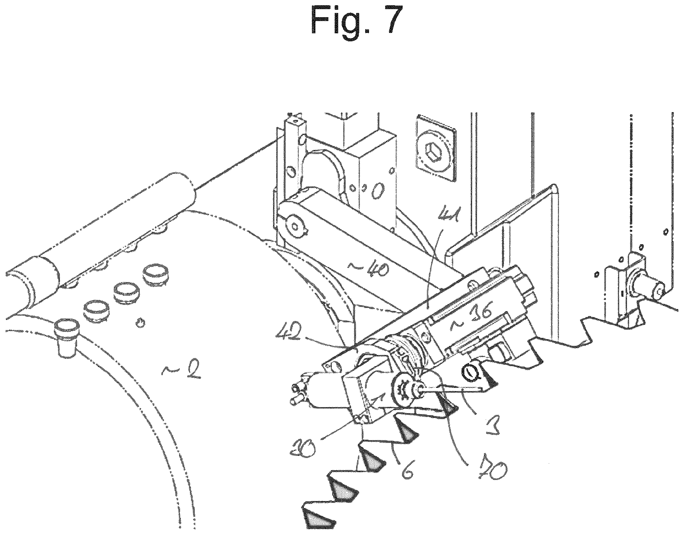

Wie in Fig. 7 ersichtlich ist die Strebe 41 hierbei starr an dem Schwenkarm 40 angeordnet und trägt an ihrem freien Ende ein Lagerelement 42, an welchen die zweite Schwenkachse 35 gelagert ist. Der Antrieb 36 für die zweite Schwenkachse erstreckt sich parallel zur Strebe 41 von dem radial verlaufenden Teil des Schwenkarms in Richtung auf das freie Ende der Strebe.

In der in Fig. 3, 5 und 6 gezeigten Parkposition erstreckt sich sowohl der Schwenkarm 40 als auch die Achse der Frässpindel 30 entlang der Begrenzungswand 51 nach oben. Der Werkzeugbruchsensor 60 ist hierbei so an der Begrenzungswand 51, insbesondere am oberen Ende der Begrenzungswand, angeordnet, dass sich in der Parkposition der in der Frässpindel aufgenommene Fingerfräser 3 im Messbereich des Werkzeugbruchsensors 60 befindet, so dass dieser in der Parkposition einen Werkzeugbruch erfassen kann.

Zum Verfahren aus einer der Bearbeitungspositionen in die Parkposition bzw. zum Verfahren aus der Parkposition in eine der Bearbeitungspositionen werden daher üblicherweise beide Schwenkachsen 35 und 45 angesteuert.

Weiterhin ist an dem Bearbeitungskopf ein Antastsensor 80 vorgesehen, welcher über die Maschinenachsen X1, Z1 und V1 auf Position bewegt werden kann. Allerdings ist ein Erfassen der Zahnlücken des Werkstücks 1 über einen solchen Antastsensor 80 aufwendig, da dieser zunächst aufwendig in eine Messposition vor die Verzahnung verfahren werden muss. Zudem muss ein solcher Antastsensor in der Nähe der Verzahnung langsam verfahren werden, um Beschädigungen zu vermeiden.

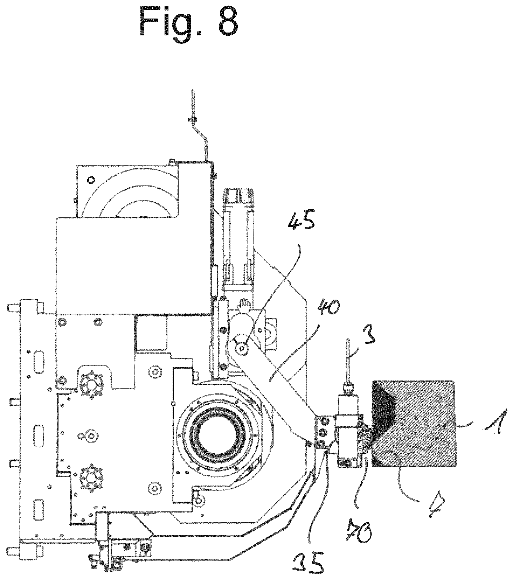

Alternativ oder zusätzlich ist daher gemäß einem zweiten Aspekt der vorliegenden Erfindung an dem Schwenkarm 40 ein Einfädelsensor 70 vorgesehen, siehe Fig. 7 und 8.

Der Einfädelsensor 70 ist im Ausführungsbeispiel bezüglich der ersten Schwenkachse in radialer Richtung gesehen an dem freien Ende des Schwenkarms angeordnet, und zwar an der parallel zur Achsrichtung B1 der Werkzeugspindel verlaufenden Strebe 41, welche den Schwenkarm bis vor den Bereich des Werkzeugs 2 verlängert.

Der Einfädelsensor 70 ist hierbei im Bereich des vom Schwenkarm abgewandten Endes der Strebe 41 und damit unmittelbar neben der Frässpindel 30 angeordnet, im Ausführungsbeispiel an dem Lagerelement 42 für die zweite Schwenkachse 35. Hierdurch kann der Abstand zwischen dem Einfädelsensor und der Frässpindel besonders gering gehalten werden.

Der Einfädelsensor 70 arbeitet berührungslos und kann beispielsweise induktiv, kapazitiv oder optisch die Zähne 7 bzw. Zahnlücken der Verzahnung erfassen, wenn er sich in der in Fig. 8 gezeigten Messposition befindet.

Die Messposition entspricht hierbei im Hinblick auf die Schwenkstellung der ersten Schwenkachse 45 im wesentlichen den Bearbeitungspositionen. Insbesondere ist die erste Schwenkachse in den Bearbeitungspositionen und/oder der Messposition so eingestellt, dass sich die zweite Schwenkachse 35 neben dem zu bearbeitenden Werkstück zwischen der oberen und unteren Kante der Verzahnung befindet.

Hierdurch befindet sich der Einfädelsensor in der Messposition ebenfalls neben der Verzahnung und kann die Zähne bzw. Zahnlücken erfassen.

Die zweite Schwenkachse 35 wird in der Messposition so eingestellt, dass der in der Frässpindel 30 aufgenommene Fingerfräser 3 außer Eingriff mit der Verzahnung ist und auch die Frässpindel selbst keine Störkontur bildet. Insbesondere kann hierbei die Rotationsachse der Frässpindel parallel zur Rotationsachse der Werkstückspindel verlaufen.

Nach dem Erfassen der Zahnlücken der Verzahnung wird die zweite Schwenkachse 35 eingesetzt, um den Fingerfräser in eine Anfasbearbeitungsposition zu verschwenken, wie sie in Fig. 7 gezeigt ist. Die Linearachsen des Bearbeitungskopfes müssen hierbei zum Verfahren von der Messposition in die Anfasbearbeitungsposition lediglich mit geringen Verfahrwegen verfahren werden, da sich die Frässpindel bereits in unmittelbarer Nachbarschaft zur Werkstück befindet.

Auch aus einem Bearbeitungsbetrieb, in welchem das Werkstück 1 über das in der Werkzeugaufnahme aufgenommene Werkzeug 2 bearbeitet, insbesondere zur Herstellung der Verzahnung verzahnbearbeitet wird, kann sehr schnell in die Messposition und/oder Anfasbearbeitungsposition gewechselt werden.

Hierfür muss lediglich der Bearbeitungskopf über die X1-Achse zurück verfahren werden, um das Werkzeug 2 außer Eingriff mit dem Werkstück zu bringen und ausreichend Platz zwischen Werkzeug 2 und Werkstück 1 für die Frässpindel zu schaffen.

Daraufhin kann die Frässpindel über ein Verschwenken des Schwenkarms 40 mittels der ersten Schwenkachse 45 aus der Parkposition in den Bereich zwischen Werkzeug 2 und Werkstück 1 verfahren werden, so dass sich gleichzeitig auch der Einfädelsensor 70 in einem Bereich vor der Verzahnung des Werkstücks befindet.

Hierbei kann zunächst die in Fig. 8 gezeigte Messposition und nach Erfassung der Zähne bzw. Zahnlücken eine der Anfasbearbeitungspositionen angefahren werden.

## Patentansprüche

1. Vorrichtung zur Anfasbearbeitung eines verzahnten Werkstücks, wobei die Vorrichtung
mindestens eine Werkstückspindel mit einer drehbar gelagerten Werkstückaufnahme zur Aufnahme des Werkstücks und
einen über mindestens eine Linearachse relativ zur Werkstückspindel bewegbaren Bearbeitungskopf umfasst, wobei an dem Bearbeitungskopf mindestens eine Werkzeugspindel mit einer drehbar gelagerten Werkzeugaufnahme zur Aufnahme mindestens eines Werkzeugs zur Bearbeitung eines in der Werkstückaufnahme aufgenommenen Werkstücks vorgesehen ist,
und wobei an dem Bearbeitungskopf eine Frässpindel mit einer drehbar gelagerten Fräseraufnahme zur Aufnahme eines Fingerfräsers zur Anfasbearbeitung einer Kante einer Verzahnung des in der Werkstückaufnahme aufgenommenen Werkstücks vorgesehen ist,
wobei der Anstellwinkel eines in der Fräseraufnahme aufgenommenen Fingerfräsers an die Kante der Verzahnung über eine erste Schwenkachse einstellbar ist,
**dadurch gekennzeichnet,**
**dass** die Frässpindel über die erste Schwenkachse schwenkbar an einem Schwenkarm angeordnet ist, wobei der Schwenkarm seinerseits über eine zweite Schwenkachse, welche parallel zur ersten Schwenkachse ausgerichtet ist, schwenkbar am Bearbeitungskopf angeordnet ist.

2. Vorrichtung nach Anspruch 1, mit einem ersten Antrieb für die erste Schwenkachse und einem zweiten Antrieb für die zweite Schwenkachse und einer Steuerung zur Ansteuerung des ersten und des zweiten Antriebs, wobei die Steuerung ausgeführt und/oder programmiert ist, den ersten Antrieb in einer Bearbeitungsposition zur Einstellung des Anstellwinkel eines in der Fräseraufnahme aufgenommenen Fingerfräsers an die Kante der Verzahnung und/oder zur Umstellung zwischen der Bearbeitung einer Oberkante und einer Unterkante der Verzahnung anzusteuern, und/oder wobei die Steuerung ausgeführt und/oder programmiert ist, die Frässpindel in einer Bearbeitungsposition zu positionieren, in welcher sich ein in der Fräseraufnahme aufgenommener Fingerfräser von einer Position neben dem Werkstück ausgehend mit einer schrägen Ausrichtung zu der Kante der Verzahnung erstreckt.

3. Vorrichtung nach Anspruch 1 oder 2, mit einem ersten Antrieb für die erste Schwenkachse und einem zweiten Antrieb für die zweite Schwenkachse und einer Steuerung zur Ansteuerung des ersten und des zweiten Antriebs, wobei die Steuerung ausgeführt und/oder programmiert ist, den Schwenkarm mit der Frässpindel von einer Bearbeitungsposition in eine Parkposition und/oder zurück zu verfahren, wobei bevorzugt die erste und die zweite Schwenkachse beim Verfahren in die Bearbeitungsposition verfahren werden, dass sich ein Winkel zwischen der Rotationsachse der Frässpindel und einer Haupterstreckungsrichtung des Schwenkarms verändert.

4. Vorrichtung nach einem der vorangegangenen Ansprüche, mit einer Steuerung zur Ansteuerung eines NC-Antriebs der zweiten Schwenkachse, wobei die Steuerung eine Anfasbearbeitungsfunktion umfasst, welche ausgeführt und/oder programmiert ist, die zweite Schwenkachse während einer Anfasbearbeitung synchron zu einer Rotation der Werkstückspindel anzusteuern, um einen in der Fräseraufnahme aufgenommenen Fingerfräser gesteuert entlang der Kante eines in der Werkstückaufnahme aufgenommenen verzahnten Werkstücks zu führen.

5. Vorrichtung nach Anspruch 4, wobei die Anfasbearbeitungsfunktion ausgeführt und/oder programmiert, die erste Schwenkachse während einer Anfasbearbeitung synchron zu einer Rotation der Werkstückspindel anzusteuern, und/oder wobei der Bearbeitungskopf über mindestens eine Linearachse parallel zur Rotationsachse der Werkzeugaufnahme und/oder parallel zur ersten und/oder zweiten Schwenkachse verfahrbar ist, wobei die Anfasbearbeitungsfunktion ausgeführt und/oder programmiert, die Linearachse synchron zu einer Rotation der Werkstückspindel anzusteuern.

6. Vorrichtung zur Anfasbearbeitung eines verzahnten Werkstücks, insbesondere Vorrichtung nach einem der vorangegangenen Ansprüchen, wobei die Vorrichtung
mindestens eine Werkstückspindel mit einer drehbar gelagerten Werkstückaufnahme zur Aufnahme des Werkstücks und
einen über mindestens eine Linearachse relativ zur Werkstückspindel bewegbaren Bearbeitungskopf umfasst, wobei an dem Bearbeitungskopf mindestens eine Werkzeugspindel mit einer drehbar gelagerten Werkzeugaufnahme zur Aufnahme mindestens eines Werkzeugs zur Bearbeitung eines in der Werkstückaufnahme aufgenommenen Werkstücks vorgesehen ist,
und wobei an dem Bearbeitungskopf eine Frässpindel mit einer drehbar gelagerten Fräseraufnahme zur Aufnahme eines Fingerfräsers zur Anfasbearbeitung einer Kante einer Verzahnung des in der Werkstückaufnahme aufgenommenen Werkstücks vorgesehen ist,
wobei die Frässpindel über einen Schwenkarm an dem Bearbeitungskopf angeordnet ist,
**dadurch gekennzeichnet,**
**dass** an dem Schwenkarm ein Einfädelsensor angeordnet ist.

7. Vorrichtung nach Anspruch 6, wobei der Einfädelsensor am freien Ende des Schwenkarms angeordnet ist, insbesondere an einem Lagerbereich für eine zweite Schwenkachse, mit welcher die Frässpindel an dem Schwenkarm angeordnet ist, und/oder
wobei der Schwenkarm über eine erste Schwenkachse schwenkbar an dem Bearbeitungskopf angeordnet ist und die Vorrichtung eine Steuerung aufweist, welche eingerichtet und/oder programmiert ist, den Schwenkarm in eine Messposition zu verfahren, in welcher sich der Einfädelsensor vor der zu vermessenden Verzahnung befindet, wobei die Frässpindel bevorzugt über eine zweite Schwenkachse an dem Schwenkarm angeordnet ist und die Steuerung die zweite Schwenkachse so ansteuert, dass sich ein in der Frässpindel aufgenommener Fingerfräser in der Messposition außer Eingriff mit der Verzahnung befindet, und/oder
wobei es sich bei dem Einfädelsensor um einen berührungslos arbeitenden Sensor handelt, insbesondere um einen induktiven, kapazitiven und/oder optischen Sensor.

8. Vorrichtung nach einem der vorangegangenen Ansprüche, wobei ein Arbeitsbereich für das Werkzeug am Bearbeitungskopf durch eine hinter dem Werkzeug vorgesehene Begrenzungswand nach hinten begrenzt wird, wobei die zweite Schwenkachse in einem Bereich vor der Begrenzungswand an dem Bearbeitungskopf angeordnet ist, wobei bevorzugt vorgesehen ist, dass sich der Schwenkarm in einer Parkposition entlang der Begrenzungswand nach oben erstreckt und bevorzugt unterhalb einer Oberkante der Begrenzungswand endet.

9. Vorrichtung nach einem der vorangegangenen Ansprüche, wobei der Schwenkarm bezüglich der Richtung der Rotationsachse der Werkzeugspindel axial neben der Werkzeugaufnahme angeordnet ist und daher in einem Bereich neben einem in der Werkzeugaufnahme aufgenommenen Werkzeug schwenkt, und/oder wobei die zweite Schwenkachse an einem Gehäuse des Hauptlagers der Werkzeugspindel angeordnet ist.

10. Vorrichtung nach einem der vorangegangenen Ansprüche, mit einem Sensor zur Bruchkontrolle eines in der Fräseraufnahme aufgenommenen Fingerfräsers, wobei der Sensor bevorzugt so angeordnet ist, dass er den Fingerfräser in einer Parkposition des Schwenkarms prüft.

11. Vorrichtung nach einem der vorangegangenen Ansprüche, wobei es sich bei der Werkzeugspindel um eine Werkzeugspindel zur Verzahnbearbeitung eines in der Werkstückaufnahme aufgenommenen Werkstücks handelt, insbesondere zum Verzahnungsfräsen, und/oder wobei es sich bei der Vorrichtung um eine Verzahnmaschine, insbesondere eine Verzahnungsfräsmaschine handelt.

12. Vorrichtung nach einem der vorangegangenen Ansprüche, wobei der Bearbeitungskopf über mindestens zwei und bevorzugt drei Linearachsen verfahrbar ist, wobei bevorzugt insbesondere eine erste Linearachse zum Verfahren in einer Richtung senkrecht zur Rotationsachse der Werkstückaufnahme und senkrecht zur Rotationsachse der Werkzeugaufnahme und eine zweite Linearachse zum Verfahren in einer Richtung parallel zur Rotationsachse der Werkstückaufnahme vorgesehen ist, und/oder wobei der Bearbeitungskopf über eine Schwenkachse gegenüber der Werkstückspindel verschwenkbar ist, insbesondere zur Einstellung eines Achskreuzwinkels, wobei die Schwenkachse bevorzugt senkrecht zur Rotationsachse der Werkstückaufnahme und senkrecht zur Rotationsachse der Werkzeugaufnahme verläuft.

13. Verfahren zur Herstellung eines verzahnten Werkstücks unter Verwendung einer Vorrichtung nach einem der vorangegangenen Ansprüche, mit den Schritten:
- Bearbeitung eines in der Werkstückaufnahme aufgenommenen Werkstücks über ein in der Werkzeugaufnahme aufgenommenes Werkzeug und
- Anfasen mindestens einer Kante des verzahnten Werkstücks mit einem in der Fräseraufnahme aufgenommenen Fingerfräser.

14. Verfahren nach Anspruch 13, wobei sich der Schwenkarm während der Bearbeitung des Werkstücks mit dem Werkzeug in einer Parkposition befindet und über die zweite Schwenkachse in eine Bearbeitungsposition verfahren wird, um die Kante anzufasen, und/oder wobei während der Anfasbearbeitung ein Antrieb der zweiten Schwenkachse synchron zur Rotation des Werkstücks betätigt wird, um den Fingerfräser entlang der Kante zu führen.

15. Verfahren nach Anspruch 13 oder 14, wobei eine Bruchkontrolle des Fingerfräsers mittels eines Sensors erfolgt, während sich der Schwenkarm in einer Parkposition befindet, und/oder wobei eine Vermessung der Verzahnung durch den Einfädelsensor erfolgt, während sich der Schwenkarm in einer Messposition befindet.
